# EUROPEAN PATENT SPECIFICATION

(11) **EP 4 438 668 B1**
(45) Date of publication and mention of the grant of the patent: **03.06.2026**
(21) Application number: 23217482.1
(22) Date of filing: 18.12.2023
(51) Int. Cl.: C08L 1/02, C08L 1/12

(54) **CELLULOSE PARTICLES AND METHOD FOR PRODUCING CELLULOSE PARTICLES**
CELLULOSEPARTIKEL UND VERFAHREN ZUR HERSTELLUNG VON CELLULOSEPARTIKELN
PARTICULES DE CELLULOSE ET PROCÉDÉ DE PRODUCTION DE PARTICULES DE CELLULOSE

(30) Priority: 28.03.2023 JP 2023052438; 26.09.2023 JP 2023163847
(43) Date of publication of application: 02.10.2024
(73) Proprietor: FUJIFILM Business Innovation Corp., Minato-ku Tokyo (JP)
(72) Inventor: IWANAGA, Takeshi, Minamiashigara-shi, Kanagawa (JP); NAITO, Ayu, Minamiashigara-shi, Kanagawa (JP); YOSHIDA, Kazusei, Minamiashigara-shi, Kanagawa (JP); YAO, Kenji, Minamiashigara-shi, Kanagawa (JP); TAGUCHI, Tetsuya, Minamiashigara-shi, Kanagawa (JP); HAMANO, Hirokazu, Minamiashigara-shi, Kanagawa (JP)
(74) Representative: Kurig, Thomas

(56) References cited:
- EP-A1- 3 932 974
- EP-A1- 3 943 530
- WO-A1-2022/137679
- JP-A- 2022 131 884

## Description

### Background

### (i) Technical Field

The present disclosure relates to cellulose particles and a method for producing cellulose particles.

### (ii) Related Art

Japanese Patent No. 4897289 proposes "a hydrophobic cellulose powder prepared by coating the surface of a cellulose powder formed of regenerated cellulose having the cellulose II crystal structure with a compound represented by the following general formula (1) at a coating weight of 0.5 to 30% by weight:

R₁CH₂CH₂Si(OR₂)₃ (1)

(wherein R₁ is a saturated hydrocarbon group having 1 or more carbon atoms or a saturated fluorocarbon group having 1 or more carbon atoms, and R₂ is a saturated hydrocarbon group having 1 or more carbon atoms."

Japanese Unexamined Patent Application Publication No. 2022-099605 proposes "resin beads that are obtained by subjecting core beads formed of a resin containing cellulose as a main component to surface treatment using a surface treatment agent and that have a volume-based cumulative 50% particle diameter of 50 µm or less, a sphericity of 0.7 to 1.0, a surface smoothness of 70 to 100%, and a degree of crystallinity of 60% or less."
WO 2022/137679 Al discloses resin beads obtained by surface treatment of core beads formed from a resin having cellulose as a main component by a solid surface treatment agent, in which the volume-based cumulative 50% particle size is 50 µm or less, the sphericity is 0.7-1.0, the surface smoothness is 70-100%, and the degree of crystallization is 60% or less.
EP 3 932 974 Al discloses a biodegradable resin particle, including: a base particle containing a biodegradable resin; a first layer on a surface of the base particle, the first layer containing at least one cationic resin of a polyalkyleneimine, a polyallylamine and a polyvinylamine; and a second layer on the first layer, the second layer containing an anionic or nonionic hydrophobic compound.
JP 2022 131884 A discloses a surface-treated cellulose powder obtained by coating the surface of a cellulose powder with one or more metal salts selected from each calcium, aluminum, and magnesium of silicic acid, alginic acid, fatty acid, and lysine dilauroylglutamate.
EP 3 943 530 A1 discloses particles having an average particle size of not less than 80 nm and not greater than 100 µm, a sphericity of not less than 0.7 and not greater than 1.0, a degree of surface smoothness of not less than 80% and not greater than 100%, and a surface contact angle with water of not less than 100°; and a total degree of acetyl substitution of the cellulose acetate is not less than 0.7 and not greater than 2.9.

### Summary

The present invention is provided in appended claims 1 and 11. Beneficial embodiments are defined in the dependent claims. The following disclosure serves a better understanding of the present invention. Accordingly, it is an object of the present disclosure to provide cellulose particles each including a base particle formed of cellulose as a main component and a coating layer that covers the base particle and contains a coating material other than a coupling agent. The shock resistance of a molded product formed from the cellulose particles is higher than that when the coverage of the base particle with the coating layer is less than 60%.

According to a first aspect of the present disclosure, there are provided cellulose particles each including:
a base particle containing cellulose as a main component; and
a coating layer that covers the base particle and contains a coating material other than a coupling agent,
wherein a coverage of the base particle with the coating layer is from 60% to 100% inclusive.

According to a second aspect of the present disclosure, in the cellulose particles according to the first aspect, the coverage of the base particle with the coating layer is from 80% to 100% inclusive.

According to a third aspect of the present disclosure, in the cellulose particles according to the second aspect, the coverage of the base particle with the coating layer is from 90% to 100% inclusive.

According to a fourth aspect of the present disclosure, in the cellulose particles according to any one of the first to third aspects, a coating mass of the coating layer with respect to the base particle is from 1% by mass to 40% by mass inclusive.

According to a fifth aspect of the present disclosure, in the cellulose particles according to the fourth aspects, the coating mass of the coating layer with respect to the base particle is from 3% by mass to 30% by mass inclusive.

According to a sixth aspect of the present disclosure, in the cellulose particles according to any one of the first to fifth aspects, the cellulose particles have a volume average particle diameter of from 1 µm to 100 µm inclusive.

According to a seventh aspect of the present disclosure, in the cellulose particles according to any one of the first to sixth aspects, the coating layer contains, as the coating material, at least one selected from the group consisting of a fatty acid, a fatty acid metal salt, and an amino acid compound.

According to an eighth aspect of the present disclosure, in the cellulose particles according to the seventh aspect, the fatty acid is at least one selected from the group consisting of a linear fatty acid and a hydroxy fatty acid, and
the fatty acid metal salt is a linear fatty acid metal salt.

According to a ninth aspect of the present disclosure, the cellulose particles according to any one of the first to eighth aspects each further include an intermediate layer between the base particle and the coating layer.

According to a tenth aspect of the present disclosure, in the cellulose particles according to the ninth aspect, the intermediate layer contains at least one intermediate material selected from the group consisting of a polyamine compound, a polyquaternium, a polysaccharide compound, and a polyacrylic acid.

According to an eleventh aspect of the present disclosure, there is provided a method for producing cellulose particles, the method including:
obtaining base particles containing cellulose as a main component; and
coating the base particles with a coating material other than a coupling agent,
wherein a coating mass of a coating layer with respect to the base particle is from 1% by mass to 40% by mass inclusive, and
wherein a coverage of the base particle with the coating layer is from 60% to 100% inclusive.

The first aspect of the present disclosure provides the cellulose particles each including: the base particle containing cellulose as a main component; and the coating layer that covers the base particle and contains the coating material other than a coupling agent. The shock resistance of a molded product formed from the cellulose particles is higher than that when the coverage of the base particle with the coating layer is less than 60%.

With the cellulose particles according to the second aspect of the present disclosure, the shock resistance of the molded product is higher than that when the coverage of the base particle with the coating layer is less than 80%.

With the cellulose particles according to the third aspect of the present disclosure, the shock resistance of the molded product is higher than that when the coverage of the base particle with the coating layer is less than 90%.

With the cellulose particles according to the fourth aspect of the present disclosure, the shock resistance of the molded product is higher than that when the coating mass of the coating layer with respect to the base particle is less than 1% by mass or more than 40% by mass.

With the cellulose particles according to the fifth aspect of the present disclosure, the shock resistance of the molded product is higher than that when the coating mass of the coating layer with respect to the base particle is less than 3% by mass or more than 30% by mass.

With the cellulose particles according to the sixth aspect of the present disclosure, the shock resistance of the molded product is higher than that when the volume average particle diameter is less than 1 µm or more than 100 µm.

With the cellulose particles according to the seventh aspect of the present disclosure, the shock resistance of the molded product is higher than that when the coating layer contains a lipid compound.

With the cellulose particles according to the eighth aspect of the present disclosure, the shock resistance of the molded product is higher than that when the fatty acid is a branched fatty acid or the fatty acid metal salt is a branched fatty acid metal salt.

With the cellulose particles according to the ninth aspect of the present disclosure, the shock resistance of the molded product is higher than that when no intermediate layer is disposed between the base particle and the coating layer.

With the cellulose particles according to the tenth aspect of the present disclosure, the shock resistance of the molded product is higher than that when the intermediate layer contains arginine or dextrin.

The cellulose particle production method according to the eleventh aspect includes: obtaining base particles containing cellulose as a main component; and coating the base particles with a coating material other than a coupling agent. The shock resistance of a molded product formed from the cellulose particles produced by this method is higher than that when the coating mass of the coating layer with respect to the base particle is less than 1% by mass or more than 40% by mass and the coverage of the base particle with the coating layer is less than 60% or more than 100%.

### Detailed Description

An exemplary embodiment of the present disclosure will be described below. The following description and Examples are illustrative of the exemplary embodiment and are not intended to limit the scope of the present disclosure.

In a set of numerical ranges expressed in a stepwise manner in the present disclosure, the upper or lower limit in one numerical range may be replaced with the upper or lower limit in another numerical range in the set of numerical ranges expressed in a stepwise manner. Moreover, in a numerical range described in the present disclosure, the upper or lower limit in the numerical range may be replaced with a value indicated in an Example.

Any component may contain a plurality of materials corresponding to the component.

When reference is made to the amount of a component in a composition, if the composition contains a plurality of materials corresponding to the component, the amount means the total amount of the plurality of materials in the composition, unless otherwise specified.

### <Cellulose particles>

Cellulose particles according to the present exemplary embodiment each include a base particle containing cellulose as a main component and a coating layer that covers the base particle and contains a coating material other than a coupling agent.

The coverage of the base particle with the coating layer is from 60% to 100% inclusive.

The coupling agent is a compound having an alkoxy group bonded directly to a metal element (such as Si, Ti, or Al) and is a compound that undergoes a hydrolysis reaction and a condensation reaction.

A molded product formed from the cellulose particles according to the present exemplary embodiment that have the structure described above has good shock resistance. The reason for this may be as follows.

The cellulose particles are highly biodegradable and robust and are therefore expected to be used as a substitute for resin particles in various fields including cosmetic applications. Moreover, as the functionality of products in these applications increases, there is a need for the cellulose particles to have various functions.

One of these functions is the shock resistance of the cellulose particles themselves or a molded product containing the cellulose particles. The shock resistance of conventional cellulose particles including a coating layer themselves or a molded product containing the cellulose particles is not sufficient. Therefore, when dropped, the molded product may be fractured, cracked, chipped, or broken. This may be because of the following reason. When the coverage with the coating layer is low, the hard base particles (i.e., the hard cellulose) are exposed in some areas. When a shock is applied to the exposed areas, the shock propagates through the cellulose particles, and the molded product may be cracked, chipped, or broken.

Accordingly, in the cellulose particles in the present exemplary embodiment, the coverage of the base particles containing cellulose as a main component with the coating layer is set to from 60% to 100% inclusive. In this case, the base particles (i.e., cellulose) are unlikely to be exposed from the coating layer. Therefore, even when the molded product receives a shock, the coating layer on the cellulose particles sufficiently exerts the function of mitigating the shock.

The above may be the reason that a molded product formed from the cellulose particles according to the present exemplary embodiment has good shock resistance.

Moreover, in the cellulose particles according to the present exemplary embodiment, the base particles (i.e., the cellulose) are unlikely to be exposed from the coating layer. Therefore, a skin feel that comes from the hardness of the cellulose particles themselves is hidden, and a good skin feel such as a moist feel or smoothness that comes from the coating layer is obtained, so that the cellulose particles are suitable for cosmetic applications.

### (Coverage with coating layer)

In the cellulose particles according to the present exemplary embodiment, the coverage of the base particles with the coating layer is from 60% to 100% inclusive, preferably from 80% to 100% inclusive, and more preferably from 90% to 100% inclusive.

If the coverage with the coating layer is less than 60%, the area of the exposed portions of the base particles (i.e., the hard cellulose) is large, and the shock resistance is low.

The coverage with the coating layer is measured by the following method.

The cellulose particles used for the measurement are dyed with ruthenium. In scanning electron microscope (SEM) observation, the coating layer dyed with ruthenium is observed as a black layer.

The cellulose particles dyed with ruthenium are observed under the SEM at a magnification of 3500X, and the ratio of the area of the observed black coating layer on one observed cellulose particle to the area of the cellulose particle is computed.

This procedure is repeated for 50 cellulose particles, and the arithmetic mean value of the obtained ratios of the area of the coating layer is computed and used as the coverage with the coating layer.

### (Base particles)

The base particle are particles on which the coating layer are to be formed and contain cellulose as a main component.

The phrase "contain cellulose as a main component" means that the content of cellulose with respect to the mass of the base particles is 90% by mass or more (preferably 95% by mass or more, 98% by mass or more, or 100% by mass).

The number average molecular weight of the cellulose is preferably 37000 or more and more preferably 45000 or more.

No particular limitation is imposed on the upper limit of the number average molecular weight of the cellulose, and the upper limit may be 100000 or less.

When the number average molecular weight of the cellulose is 37000 or more, the moist feel and smoothness are improved. The reason for this may be as follows.

When the number average molecular weight is 37000 or more, an increase in the number of terminal hydroxy groups is prevented, and the number of hydroxy groups per unit volume decreases, so that the number of intramolecular and extramolecular hydrogen bonds and the bonding strength decrease. Therefore, the flexibility of the cellulose particles increases, and the moist feel and smoothness can be easily improved.

The number average molecular weight of the cellulose is measured by gel permeation chromatography (differential refractometer: Optilab T-rEX manufactured by Wyatt Technology, multi angle light scattering detector: DAWN HELEOS II manufactured by Wyatt Technology, columns: one TSKgel α-M and one TSKgel α-3000 manufactured by TOSOH Corporation) using dimethylacetamide (with 0.1M lithium chloride added thereto) as a solvent.

### - Additional components -

The base particles may contain additional components.

Examples of the additional components include a plasticizer, a flame retardant, a compatibilizer, a release agent, a light-resisting agent, a weather-resisting agent, a coloring agent, a pigment, a modifier, a dripping inhibitor, an antistatic agent, an anti-hydrolysis agent, a filler, reinforcing agents (such as glass fibers, carbon fibers, talc, clay, mica, glass flakes, milled glass, glass beads, crystalline silica, alumina, silicon nitride, aluminum nitride, and boron nitride), acid acceptors for preventing release of acetic acid (oxides such as magnesium oxide and aluminum oxide; metal hydroxides such as magnesium hydroxide, calcium hydroxide, aluminum hydroxide, and hydrotalcite; calcium carbonate; and talc), and reactive trapping agents (such as epoxy compounds, acid anhydride compounds, and carbodiimides).

The content of each additional component with respect to the total mass of the base particles may be from 0% by mass to 5% by mass inclusive. The term "0% by mass" means that the corresponding additional component is not contained.

### (Cellulose particles including coating layer)

The coating layer may contain a coating material selected from hydrophobic compounds. Specifically, the coating layer may contain at least one coating material selected from the group consisting of a fatty acid, a fatty acid metal salt, and an amino acid compound. These coating materials improve the hydrophobicity and flexibility of the coating layer, and the shock resistance of the molded product is thereby improved. Moreover, the moist feel and smoothness are improved.

### - Fatty acid

The fatty acid is a linear or branched saturated or unsaturated fatty acid. The fatty acid may be a mixture of a saturated fatty acid and an unsaturated fatty acid.

The fatty acid may be a fatty acid having 14 to 22 carbon atoms (preferably 14 to 20 carbon atoms). Specific examples of the linear fatty acid having 14 to 22 carbon atoms include behenic acid, arachidic acid, palmitic acid, stearic acid, isostearic acid, and myristic acid.

### - Fatty acid metal salt

The fatty acid metal salt is a linear or branched saturated or unsaturated fatty acid metal salt. The fatty acid metal salt may be a mixture of a saturated fatty acid metal salt and an unsaturated fatty acid metal salt.

From the viewpoint of improving hydrophobicity against high-temperature water and the ability to maintain the moist feel, the fatty acid metal salt may be a metal salt of a fatty acid having 14 to 22 carbon atoms (preferably 14 to 20 carbon atoms). Examples of the metal salt of a fatty acid having 14 to 22 carbon atoms include metal salts of stearic acid, metal salts of behenic acid, metal salts of palmitic acid, and metal salts of myristic acid.

Examples of the metal in the fatty acid metal salt include divalent metals.

Specific examples of the metal in the fatty acid metal salt include magnesium, calcium, aluminum, barium, and zinc.

In particular, from the viewpoint of the shock resistance of the molded product, the moist feel, and the smoothness, the fatty acid may be at least one selected from the group consisting of linear fatty acids and hydroxy fatty acids, and the fatty acid metal salt may be a linear fatty acid metal salt. The fatty acid and the fatty acid salt each have a terminal carboxylic acid having an affinity for a hydroxy group and are thereby fixed to the cellulose particles, and repulsion between the outward extending aliphatic groups may cause them to form a sponge-like structure. Therefore, the shock resistance of the molded product, the moist feel, and the smoothness can be easily improved.

### - Amino acid compound

The amino acid compound is an amino acid or an amino acid derivative.

Examples of the amino acid compound include lauroyl lysine, lauryl arginine, myristyl leucine, and stearoylglutamic acid.

The coating material included in the coating layer is not limited to those exemplified above, and other examples of the coating material include lipid compounds (such as phosphate lipids), silicone compounds (such as dimethylsiloxane and hydrogen dimethicone), fluorinated compounds (such as perfluoropolyether and perfluorooctyltriethoxysilane), and ceramide compounds (such as hydroxypropyl bispalmitamide MEA).

From the viewpoint of improving the moist feel, the smoothness, and the shock resistance of the molded product, the coating mass of the coating layer with respect to the base particle is preferably from 1% to 40% by mass inclusive, more preferably from 3% by mass to 30% by mass inclusive, and still more preferably from 10% by mass to 30% by mass inclusive.

The content of the coating material with respect to the total mass of the coating layer is preferably from 90% by mass to 100% by mass inclusive and more preferably from 95% by mass to 100% by mass inclusive.

### - Intermediate layer -

In the cellulose particles having the coating layer, an intermediate layer may be provided between the base particle and the coating layer. The intermediate layer may contain at least one intermediate material selected from the group consisting of polyamine compounds, polyquaterniums, polysaccharide compounds, and polyacrylic acids.

In the cellulose particles according to the present exemplary embodiment, when the intermediate layer is disposed between the base particle and the coating layer, delamination of the coating layer is prevented, and the shock resistance of the molded product, the moist feel, and the smoothness are easily improved. In particular, with the intermediate material described above, the adhesion between the cellulose base particle and the coating layer containing the coating material increases, and the shock resistance of the molded product, the moist feel, and the smoothness are easily improved.

The polyamine compound is a generic term of aliphatic hydrocarbons having two or more primary amino groups.

Example of the polyamine compound include polyalkylenimine, polyallylamine, polyvinylamine, and polylysine.

From the viewpoint of improving biodegradability, the polyalkylenimine is preferably a polyalkylenimine including a structural unit having an alkylene group having 1 to 6 carbon atoms (preferably 1 to 4 carbon atoms and more preferably 1 to 2 carbon atoms) and more preferably polyethyleneimine.

Examples of the polyallylamine include homopolymers and copolymers of allylamine, allylamine amidosulfate, diallylamine, and dimethylallylamine.

The polyvinylamine is, for example, a product produced by hydrolysis of poly(N-vinylformamide) with an alkali, and specific examples include "PVAM-0595B" manufactured by Mitsubishi Chemical Corporation.

The polylysine may be a material extracted from a natural product, a material produced using a transformed microorganism, or a chemically synthesized material.

Examples of the polyquaternium include polyquaternium-6, polyquaternium-7, polyquaternium-10, polyquaternium-11, polyquaternium-51, polyquaternium-61, and polyquaternium-64.

The content of the polyquaternium with respect to the total mass of the cellulose particles may be from 0.2% by mass to 2% by mass inclusive.

From the viewpoint of improving the shock resistance of the molded product, the moist feel, and the smoothness, the coating mass of the intermediate layer with respect to the base particle is preferably from 0.1% by mass to 20% by mass inclusive and more preferably from 0.2% by mass to 2% by mass inclusive.

The content of the intermediate material with respect to the total mass of the intermediate layer is preferably from 90% by mass to 100% by mass inclusive and more preferably from 95% by mass to 100% by mass inclusive.

From the viewpoint of improving the shock resistance of the molded product, the moist feel, and the smoothness, the ratio of the coating mass of the coating layer to the coating mass of the intermediate layer (i.e., the ratio = the coating mass of the coating layer / the coating mass of the intermediate layer) is preferably from 0.05 to 400 inclusive, more preferably from 1.5 to 150 inclusive, and still more preferably from 5 to 150 inclusive.

### - External additive -

Inorganic particles may be added to the cellulose particles according to the present exemplary embodiment. When the inorganic particles are externally added, secondary aggregation of the particles is prevented, and therefore the particles can easily exert their intrinsic properties. Therefore, the shock resistance of the molded product, the moist feel, and the smoothness can be easily improved. Moreover, a reduction in biodegradability may be prevented.

The external additive may be at least one selected from the group consisting of silicon-containing compound particles and metal oxide particles.

The silicon-containing compound particles are particles containing silicon.

The silicon-containing compound particles may be particles containing only silicon or may be particles containing silicon and other elements.

The silicon-containing compound particles may be silica particles. The silica particles may be particles containing silica, i.e., SiO₂, as a main component and may be crystalline or amorphous. The silica particles may be particles produced using a silicon compound such as water glass or alkoxysilane as a raw material or may be particles obtained by pulverizing quartz.

An oxide of a metal other than silicon can be used as the metal oxide.

Examples of the metal oxide include zinc oxide, magnesium oxide, iron oxide, and aluminum oxide.

From the viewpoint of a feel (specifically, a texture), the volume average particle diameter of the external additive is preferably from 1 nm to 100 nm inclusive and more preferably from 5 nm to 30 nm inclusive.

The volume average particle diameter of the external additive is measured using the same method as the method for measuring the volume average particle diameter of cellulose.

The amount of the external additive added externally may be from 0.1% by mass to 2% by mass inclusive with respect to the total mass of the cellulose particles (the cellulose particles with no external additive externally added thereto).

### (Volume average particle diameter)

The volume average particle diameter of the cellulose particles according to the present exemplary embodiment is preferably from 1 µm to 100 µm inclusive, more preferably from 2 µm to 20 µm inclusive, and still more preferably from 4 µm to 10 µm inclusive.

When the volume average particle diameter of the cellulose particles according to the present exemplary embodiment is from 1 µm to 100 µm inclusive, appropriate particle diameters are obtained. In this case, the flexibility of the cellulose particles increases, and the shock resistance of the molded product is improved. Moreover, the moist feel and the smoothness are also improved.

The volume average particle diameter of the cellulose particles is measured as follows.

An LS particle diameter distribution measurement apparatus "Beckman Coulter LS13 320 (manufactured by Beckman Coulter)" is used to measure the diameters of particles, and a cumulative particle diameter distribution is drawn from the small diameter side. A particle diameter at a cumulative frequency of 50% is determined as the volume average particle diameter.

### <Method for producing cellulose particles>

A method for producing the cellulose particles according to the present exemplary embodiment includes, for example, the steps of: obtaining base particles containing cellulose as a main component (this step is hereinafter referred to as a "cellulose particle (base particle) producing step"); and coating the base particles with the coating material other than a coupling agent and optionally with the intermediate material (this step is hereinafter referred to as an "intermediate layer and coating layer forming step"). With this method, cellulose particles in which the coverage of the base particle with the coating layer is from 60% to 100% inclusive, preferably cellulose particles in which the coating mass of the coating layer with respect to the base particle is from 1% by mass to 40% by mass inclusive and in which the coverage of the base particle with the coating layer is from 60% to 100% inclusive, can be obtained.

Specifically. the cellulose particle production method according to the present exemplary embodiment is, for example, as follows.

### - Cellulose particles (base particles) producing step -

(1) First, cellulose acylate is dissolved in a water-soluble organic solvent A to prepare a cellulose acylate solution A.
(2) Next, the cellulose acylate solution A is added to a calcium carbonate dispersion obtained by dispersing calcium carbonate in water, and the mixture is stirred to prepare a cellulose acylate solution B.
(3) Next, the cellulose acylate solution B is added to a solution mixture of carboxymethyl cellulose, a water-soluble organic solvent B, and water, and the mixture is stirred at high speed to prepare a cellulose acylate solution C.
(4) Next, sodium hydroxide is added to the cellulose acylate solution C, and then the resulting cellulose acylate solution C is heated to remove the water-soluble organic solvents A and B. Then hydrochloric acid is added to form cellulose acylate particles. Then the cellulose acylate particles are separated by filtration. The separated cellulose acylate particles are dispersed in water to prepare a cellulose acylate particle dispersion.
(5) Next, sodium hydroxide is added to the cellulose acylate particle dispersion. The resulting cellulose acylate particle dispersion is heated in a weak alkaline environment and stirred to saponify the cellulose acylate particles, and a cellulose particle suspension is thereby prepared.
(6) Next, hydrochloric acid is added to the cellulose particle suspension to adjust the pH of the suspension to near neutral (e.g., in the range of from 6.5 to 7 inclusive). Then the cellulose particles are repeatedly separated by filtration and washed with pure water. When the conductivity of the filtrate becomes 10 µs/cm or less, the cellulose particles separated by filtration are dried.

The cellulose acylate is a cellulose derivative obtained by replacing at least one hydroxy group in cellulose with an aliphatic acyl group (acylating the cellulose). Specifically, the cellulose acylate is a cellulose derivative in which at least one hydroxy group in the cellulose is replaced with -CO-R^{AC} (R^{AC} represents an aliphatic hydrocarbon group).

The water-soluble organic solvent A is a solvent that allows 0.1% by mass to 10% by mass of water to dissolve therein at 25°C, and example thereof include ethyl acetate and butyl acetate.

The water-soluble organic solvent B is a solvent that allows 0.1% by mass to 10% by mass of water to dissolve therein at 25°C, and examples thereof include methyl ethyl ketone and acetone.

In the above-described production process, by adjusting the mass ratio of the water-soluble organic solvent A to the water-soluble organic solvent B in the solvent mixture capable of dissolving the cellulose acylate, the kinetic friction coefficient, bulk density, surface smoothness, solidity, etc. of the cellulose particles can be controlled.

By adjusting the amount of carboxymethyl cellulose, the volume average particle diameter of the cellulose particles can be controlled.

By controlling these properties, the cellulose particles according to the present exemplary embodiment are obtained.

### - Intermediate layer and coating layer forming step -

First, a water dispersion containing the base particles dispersed therein is prepared. The base particles may be washed with an acid before the preparation of the water dispersion.

Next, the water dispersion containing the base particles dispersed therein is mixed with an aqueous solution containing the intermediate material forming the intermediate layer. In this manner, for example, hydroxy groups of the cellulose contained in the base particles react with amine sites, carboxyl groups, amino groups, etc. of the compound forming the intermediate layer, or the hydroxy groups form hydrogen bonds, and the intermediate layer is thereby formed. However, when the intermediate layer is not formed, this procedure is not performed.

Then the water dispersion in which the base particles having the intermediate layer formed thereon are dispersed is heated. Then the coating material forming the coating layer is added, and the mixture is stirred. The coating layer is thereby formed.

When the coating layer is formed, the heating temperature, the amount of the coating material added, the addition time of the coating material, the stirring time after the addition of the coating material are adjusted to control the coverage with the coating layer.

Then the cellulose particles having the coating layer are separated from the solution mixture. To separate the cellulose particles having the coating layer, the solution mixture is subjected to, for example, filtration. The separated cellulose particles having the coating layer may be washed with water. In this manner, an unreacted surface treating polymer can be removed. Then the cellulose particles having the coating layer are dried, and the cellulose particles according to the present exemplary embodiment are thereby obtained.

### - External addition step -

An external additive may be added to the obtained cellulose particles.

The external addition step may be, for example, treatment in which the external additive is added to the cellulose particles using a mixing mill, a V blender, a Henschel mixer, a Loedige mixer, etc.

### <Applications>

Examples of the application of the cellulose particles according to the present exemplary embodiment include granular materials such as cosmetics, rolling materials, abrasives, scrubbing agents, display spacers, materials for bead molding, light diffusing particles, resin strengthening agents, refractive index control agents, biodegradation accelerators, fertilizers, water-absorbent particles, toner particles, and anti-blocking particles.

The application of the cellulose particles according to the present exemplary embodiment may be cosmetics.

In particular, the application of the cellulose particles according to the present exemplary embodiment may be an additive for cosmetics.

The flexibility of the cellulose particles according to the present exemplary embodiment is high. Therefore, when the cellulose particles are used as an additive for a cosmetic and the cosmetic is applied to the skin, the cosmetic spreads well over the skin with less friction.

The cellulose particles according to the present exemplary embodiment are applicable to, for example, additives for cosmetics such as base makeup cosmetics (such as makeup bases, concealers, foundations, and face powders), makeup cosmetics (such as lipsticks, glosses, lip liners, cheek cosmetics, eye shadows, eyeliners, mascaras, eyebrow cosmetics, nail polishes, and nail care cosmetics), and skin care cosmetics (such as facial cleansers, cleansing creams, lotions, emulsions, liquid foundations, face packs, face masks, and eye and mouth care cosmetics).

In particular, the cellulose particles according to the present exemplary embodiment may be used as cosmetic additives for makeup cosmetics because the cosmetic additives for makeup cosmetics are required to have flexibility and biodegradability.

### [EXAMPLES]

Examples will next be described. However, the present disclosure is not limited to these Examples. In the following description, "parts" and "%" are based on mass, unless otherwise specified.

### <Preparation of materials>

The following materials are prepared.

### (Coating materials)

- ST-1: Calcium stearate (fatty acid metal salt), "Calcium stearate vegetable" NOF CORPORATION
- ST-2: Behenic acid (fatty acid), "NAA-222S" NOF CORPORATION
- ST-3: Lauroyl lysin (amino acid compound), "AMIHOPE LL" Ajinomoto Co., Inc.
- ST-4: Hydrogenated lecithin (lipid compound), "NIKKOL LECINOL S-10" Nikko Chemicals Co., Ltd.
- ST-5: Hydrogen dimethicone (silicone compound), "KF-9901" Shin-Etsu Chemical Co., Ltd.
- ST-6: Perfluorooctyl trimethoxysilane (fluorinated compound), "Perfluorooctyl triethoxysilane" Fluorochem Ltd.
- ST-7: Hydroxypropyl bispalmitamide MEA (ceramide compound), "PACIFICOS CRM" MACROCARE Ltd.
- ST-8: Isostearic acid, "Reagent" FUJIFILM Wako Pure Chemical Corporation
- ST-9: Aluminum stearate, "Reagent" FUJIFILM Wako Pure Chemical Corporation
- ST10: Zinc stearate, "Reagent" FUJIFILM Wako Pure Chemical Corporation
- ST11: Magnesium myristate, TAIHEI CHEMICAL INDUSTRIAL CO., LTD.
- ST12: Zinc myristate, Nitto Kasei Co., Ltd.
- ST13: Calcium behenate, Nitto Kasei Co., Ltd.
- ST14: Sodium stearoyl glutamate, "AMISOFT" Ajinomoto Co., Inc.
- ST15: Zinc stearate (fatty acid metal salt), "SPZ-100F" Sakai Chemical Industry Co., Ltd.
- ST16: n-Octyltriethoxysilane (silane coupling agent), "Reagent" FUJIFILM Wako Pure Chemical Corporation
- ST-17: n-Isopropyl triisostearoyl titanate (titanium coupling agent), "Reagent" FUJIFILM Wako Pure Chemical Corporation
- AA-1: Polyethyleneimine (polyamine compound), "PEI-1500" NIPPON SHOKUBAI Co., Ltd.
- AA-2: Polyacrylic acid (polyacrylic acid), "JURYMER AC-10H" TOAGOSEI Co., Ltd.
- AA-3: Polyquaternium 11 (polyquaternium), "LUVIQUAT PQ 11 AT 1" BASF Japan Ltd.
- AA-4: Cationic guar gum (polysaccharide), "RHABALL GUM CG-M" Sumitomo Pharma Food & Chemical Co., Ltd.

### <Examples 1 to 7 and 10 to 22 and Comparative Example 2>

### - Formation of base particles -

130 Parts of DAC ("L-50" manufactured by Daicel Corporation, cellulose diacetate, weight-average degree of polymerization: 570) used as the cellulose acylate is thoroughly dissolved in 870 parts of ethyl acetate. The prepared solution is added to a dispersion prepared by dispersing 60 parts by mass of calcium carbonate in 500 parts by mass of pure water, and the mixture is stirred for 5 hours. The resulting mixture is added to a dispersion prepared by dispersing 5 parts by mass of carboxymethyl cellulose and 400 parts by mass of methyl ethyl ketone in 800 parts by mass of pure water, and the mixture is stirred for 10 minutes using a highspeed emulsifier. 10 Parts by mass of sodium hydroxide is added to the mixture, and the resulting mixture is stirred at 80°C for 10 hours to remove ethyl acetate and methyl ethyl ketone. 20 Parts by mass of dilute hydrochloric acid is added to the mixture to dissolve calcium carbonate. The residue is separated by filtration and re-dispersed in pure water to thereby obtain a slurry of cellulose acylate particles.

20 Parts by mass of a 20% aqueous sodium hydroxide solution is added to 500 parts by mass of the slurry of the cellulose acylate particles (solid content: 50 parts by mass), and the mixture is stirred at 40°C for 12 hours to saponify the cellulose acylate particles. Hydrochloric acid is added dropwise to the slurry until the pH of the slurry reaches 7. Then the slurry is filtered, and the residue is washed with an excess amount of pure water, and the filtration and washing are repeated until the conductivity of the filtrate becomes 10 µs/cm or less. Finally, the obtained cake-like residue is filtered, and the resulting residue is freeze-dried to thereby obtain saponified cellulose base particles.

### - Surface treatment -

The cake-like cellulose base particles obtained by repeated filtration and washing performed until the conductivity of the filtrate becomes 10 µs/cm or less are brought into a slurry state in pure water to thereby obtain a base particle slurry.

An intermediate material of a type shown in Table 1 in an amount giving a coating mass shown in Table 1 is added to 500 parts by mass of the base particle slurry (solid content: 50 parts by mass), and the mixture is continuously stirred for 1.5 hours while the temperature is maintained at 35°C. In this manner, an intermediate layer with a coating mass shown in Table 1 is formed on the base particles.

Next, the slurry of the base particles having the intermediate layer formed thereon is heated to a treatment temperature shown in Table 1, and a coating material of a type shown in Table 1 in an amount giving a coating mass shown in Table 1 is added to the slurry. Then the mixture is stirred for a stirring time shown in Table 1. In this manner, a coating layer with a coating mass shown in Table 1 is formed on the intermediate layer.

Then the base particles having the intermediate layer and the coating layer formed thereon are repeatedly filtered and washed and then washed until the conductivity of the filtrate becomes 10 µs/cm or less. After the washing, the obtained cake is dried to thereby obtain cellulose particles having the intermediate layer and the coating layer formed thereon.

The obtained particles are stirred using an FM mixer (FM40 manufactured by Nippon Coke & Engineering Co., Ltd.) at a rotation speed of 4000 min⁻¹ for 2 hours while the temperature of the mixer is maintained at 25°C to thereby smoothen the surface of the coating layer.

In some Examples, cellulose particles with no intermediate layer formed thereon are produced, as indicated by "-" in Table 1.

### <Example 8>

Saponified cellulose base particles are obtained in the same manner as in Example 1 except that the amount of the carboxymethyl cellulose added after the cellulose acylate is dissolved in ethyl acetate is changed to 12 parts by mass.

### <Example 9>

Saponified cellulose base particles are obtained in the same manner as in Example 1 except that the amount of the carboxymethyl cellulose added after the cellulose acylate is dissolved in ethyl acetate is changed to 0.7 parts by mass.

### <Example 23>

A solution containing aluminum chloride in an amount one half that of a surface treatment coating material shown in Table 1 is prepared such that the solid content is 5 parts by mass. The surface treatment coating material is added to the solution, and the resulting solution is added dropwise over 10 minutes. Saponified cellulose base particles are obtained in the same manner as in Example 1 except for the above procedure.

### <Comparative Example 1: Untreated cellulose particles>

The solid content of the saponified cellulose base particle slurry is adjusted to 10%, and 500 parts by mass of the resulting slurry is collected. 17.5 Parts by mass of 20% NaOH is added to the slurry, and the mixture is stirred in an environment at 30°C for 6 hours. Hydrochloric acid is added to the saponified particle slurry to adjust the pH to 7. Then the slurry is repeatedly filtered and washed and then washed until the conductivity of the filtrate becomes 10 µs/cm or less to thereby obtain cellulose particles.

### <Comparative Example 3: Cellulose particles subjected to surface treatment with fatty acid by dry process>

50 Parts by mass of the saponified cellulose base particles in Example 1 and 15 parts by mass of zinc stearate ("SPZ-100F" Sakai Chemical Industry Co., Ltd.) are placed in a compact mixer. Then the particles and zinc stearate are mixed by a dry process for 4 minutes to thereby obtain cellulose particles with a zinc stearate coating layer formed thereon.

### <Comparative Example 4: Cellulose particles treated with propylethoxysilane>

15 Parts by mass of n-octyltriethoxysilane is added dropwise to 50 parts by mass of the saponified cellulose base particles in Example 1. The dropwise addition is performed while the particles are stirred in a compact heating mixer. A n-octyltriethoxysilane coating layer is thereby formed on the surface of the base particles. Then an aqueous aluminum chloride solution prepared by dissolving 0.1% by mass of aluminum chloride in a twenty-fold amount of water is similarly added to the base particles having the coating layer formed thereon, and the mixture is stirred for 30 minutes while the temperature is maintained at 35°C. Then the temperature of the mixer is increased to 90°C to age the base particles for 5 hours, and cellulose particles are thereby obtained.

### <Comparative Example 5: Cellulose particles treated with isopropyl triisomyristyloyl titanate>

Cellulose particles are obtained in the same manner as in Comparative Example 3 except that, instead of n-octyltriethoxysilane in Comparative Example 3, 15 parts by mass of n-isopropyl triisomyristyloyl titanate is added dropwise to form a n-isopropyl triisomyristyloyl titanate coating layer on the surface of the base particles.

### <Evaluation of physical properties>

### <Properties of particles>

The following properties of the cellulose particles obtained in the Examples are measured using the methods described above.
- Coverage with coating layer
- Volume average particle diameter of cellulose particles (denoted by "Particle diameter" in Table 1)

### <Evaluation>

The moist feel and smoothness of the cellulose particles obtained and the shock resistance of molded products are evaluated as follows.

### - Moist feel and smoothness -

Ten female testers are selected, and 5 g of a cellulose particle sample is placed on the back of their hand and spread over the skin. Then the testers are asked to rate the moist feel and smoothness. Specifically, 5 is the best, and 0 is the worst. The arithmetic average of the rating scores by the ten testers is determined for evaluation.

### - Shock resistance of molded products -

The cellulose particles in the Examples are used to obtain powder foundations having formulations shown in Table 2 using a well-known method.

The obtained powder foundations are pressed and molded using metal pans of the same type, and the molded products of the powder foundations are placed in compact cases.

Each compact case is dropped from a height of 0.75 m. The dropping procedure is repeated three times, and then the state of the molded product of the powder foundation is observed and rated according to the following criteria.
A (⊚): The molded product is unchanged.
B (∘): The surface of the molded product is slightly cracked.
C (Δ): The molded product is deeply cracked or chipped.
D(×): The molded product is smashed into pieces.

**Table 1**

| | Particle number | Coating layer | | | | | Intermediate layer | | Particle properties | |
|---|---|---|---|---|---|---|---|---|---|---|
| | | Coating material | Treatment temperature (°C) | Addition time of coating material (h) | Stirring time after addition of coating material (h) | Coating mass (% by mass) (with respect to base particle) | Intermediate material | Coating mass (% by mass) (with respect to base particle) | Coverage with coating layer (%) | Particle diameter (µm) |
| Example 1 | KJ1 | ST-1 | 70 | 4.5 | 0.5 | 15 | AA-1 | 0.5 | 97 | 7 |
| Example 2 | KJ2 | ST-1 | 68 | 7.5 | 0.5 | 30 | AA-1 | 0.5 | 98 | 7 |
| Example 3 | KJ3 | ST-1 | 75 | 0.5 | 0.5 | 2 | AA-1 | 0.5 | 76 | 7 |
| Example 4 | KJ5 | ST-1 | 70 | 4.5 | 0.1 | 15 | AA-1 | 0.5 | 86 | 7 |
| Example 5 | KJ6 | ST-1 | 70 | 4.5 | 0.5 | 15 | AA-2 | 0.5 | 91 | 7 |
| Example 6 | KJ7 | ST-1 | 70 | 4.5 | 0.5 | 15 | AA-3 | 0.5 | 90 | 7 |
| Example 7 | KJ8 | ST-1 | 70 | 4.5 | 0.5 | 15 | AA-4 | 0.5 | 88 | 7 |
| Example 8 | KJ9 | ST-1 | 70 | 4.5 | 0.5 | 15 | AA-1 | 0.5 | 90 | 3 |
| Example 9 | KJ10 | ST-1 | 70 | 4.5 | 0.5 | 15 | AA-1 | 0.5 | 98 | 92 |
| Example 10 | KJ11 | ST-1 | 75 | 0.75 | 0.5 | 2 | - | - | 68 | 7 |
| Example 11 | KJ12 | ST-2 | 72 | 4.5 | 0.5 | 15 | AA-1 | 0.5 | 95 | 7 |
| Example 12 | KJ13 | ST-3 | 72 | 4.5 | 0.5 | 15 | AA-1 | 0.5 | 92 | 7 |
| Example 13 | KJ14 | ST-4 | 73 | 3 | 0.5 | 15 | AA-1 | 0.5 | 90 | 7 |
| Example 14 | KJ15 | ST-5 | 73 | 3.75 | 0.5 | 15 | AA-1 | 0.5 | 93 | 7 |
| Example 15 | KJ16 | ST-6 | 73 | 3.75 | 0.5 | 15 | AA-1 | 0.5 | 93 | 7 |
| Example 16 | KJ17 | ST-7 | 73 | 3.75 | 0.5 | 15 | AA-1 | 0.5 | 94 | 7 |
| Example 17 | KJ18 | ST-8 | 70 | 4.5 | 0.5 | 15 | AA-1 | 0.5 | 90 | 7 |
| Example 18 | KJ19 | ST-9 | 70 | 4.5 | 0.5 | 15 | AA-1 | 0.5 | 97 | 7 |
| Example 19 | KJ20 | ST-10 | 70 | 4.5 | 0.5 | 15 | AA-1 | 0.5 | 96 | 7 |
| Example 20 | KJ21 | ST-11 | 70 | 4.5 | 0.5 | 15 | AA-1 | 0.5 | 96 | 7 |
| Example 21 | KJ22 | ST-12 | 70 | 4.5 | 0.5 | 15 | AA-1 | 0.5 | 98 | 7 |
| Example 22 | KJ23 | ST-13 | 70 | 4.5 | 0.5 | 15 | AA-1 | 0.5 | 95 | 7 |
| Example 23 | KJ24 | ST-14 | 70 | 4.5 | 0.5 | 15 | AA-1 | 0.5 | 97 | 7 |
| Comparative Example 1 | KJ19 | - | - | | - | - | - | - | 0 | 7 |
| Comparative Example 2 | KJ20 | ST-1 | 70 | 4.5 | 0.5 | 0.5 | - | - | 58 | 7 |
| Comparative Example 3 | KJ20 | ST-15 | - | - | - | 15 | - | - | 59 | 7 |
| Comparative Example 4 | KJ21 | ST-16 | - | - | - | 15 | - | - | - | 7 |
| Comparative Example 5 | KJ22 | ST-17 | - | - | - | 15 | - | - | - | 7 |

**Table 2**

| Powder foundations | | | |
|---|---|---|---|
| Formulation | Compound | Product name (manufacturer) | Parts by mass |
| Particles | Particles | Cellulose particles shown in Table 1 | 10 |
| Powder other than the particles | Talc | Talc CT-25 (YAMAGUCHI MICA CO., LTD.) | 50 |
| | Mica | Mica FA450 (YAMAGUCHI MICA CO., LTD.) | 19 |
| | Titanium oxide | MKR-1 (Sakai Chemical Industry Co., Ltd.) | 9.5 |
| | Black iron oxide | C33-134 Sun CROMA Black Iron Oxide (Sun Chemical) | 0.2 |
| | Red iron oxide | C33-128 Sun CROMA Red Iron Oxide (Sun Chemical) | 0.4 |
| | Yellow iron oxide | C33-210 Sun CROMA Yellow Iron Oxide (Sun Chemical) | 2.4 |
| Binder | Diisostearyl malate | Neosolue-DISM (NIPPON FINE CHEMICAL CO., LTD.) | 3 |
| | Caprylic/capric triglyceride | Caprylic/capric triglyceride (FUJIFILM Wako Pure Chemical Corporation) | 2 |
| | Neopentyl glycol dicaprate | NPDC (KOKYU ALCOHOL KOGYO CO., LTD.) | 2 |
| | Pentylene glycol | DIOL PD-V (KOKYU ALCOHOL KOGYO CO., LTD.) | 1.5 |
| Total | | | 100 |

**Table 3**

| | Moist feel | Smoothness | Breakage resistance when dropped |
|---|---|---|---|
| Example 1 | 5.0 | 5.0 | A(⊚) |
| Example 2 | 5.0 | 5.0 | A(⊚) |
| Example 3 | 4.3 | 3.2 | B(○) |
| Example 4 | 4.0 | 4.4 | A(⊚) |
| Example 5 | 5.0 | 4.8 | A(⊚) |
| Example 6 | 4.8 | 5.0 | A(⊚) |
| Example 7 | 3.8 | 4.3 | A(⊚) |
| Example 8 | 4.6 | 4.8 | A(⊚) |
| Example 9 | 4.8 | 5.0 | B(○) |
| Example 10 | 3.4 | 3.8 | B(○) |
| Example 11 | 4.6 | 4.7 | A(⊚) |
| Example 12 | 4.6 | 4.5 | A(⊚) |
| Example 13 | 4.8 | 4.8 | A(⊚) |
| Example 14 | 4.8 | 4.9 | A(⊚) |
| Example 15 | 4.8 | 4.7 | A(⊚) |
| Example 16 | 4.4 | 4.6 | A(⊚) |
| Example 17 | 3.6 | 3.8 | B(○) |
| Example 18 | 5.0 | 4.9 | A(⊚) |
| Example 19 | 4.1 | 4.4 | A(⊚) |
| Example 20 | 4.6 | 4.7 | A(⊚) |
| Example 21 | 4.0 | 4.5 | A(⊚) |
| Example 22 | 4.0 | 4.4 | A(⊚) |
| Example 23 | 5.0 | 5.0 | A(⊚) |
| Comparative Example 1 | 2.7 | 1.8 | D(×) |
| Comparative Example 2 | 2.8 | 2.8 | C(Δ) |
| Comparative Example 3 | 2.8 | 2.6 | C(Δ) |
| Comparative Example 4 | 1.8 | 2.1 | D(×) |
| Comparative Example 5 | 1.6 | 1.9 | D(×) |

As can be seen from the above results, the cellulose particles in the Examples can form molded products having better shock resistance than the cellulose particles in the Comparative Examples.

Moreover, the cellulose particles in the Examples have excellent moist feel and excellent smoothness.

The foregoing description of the exemplary embodiment of the present disclosure has been provided for the purposes of illustration and description. It is not intended to be exhaustive or to limit the disclosure to the precise forms disclosed. Obviously, many modifications and variations will be apparent to practitioners skilled in the art. The embodiment was chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims.

## Claims

1. Cellulose particles each comprising:
a base particle containing cellulose as a main component; and
a coating layer that covers the base particle and contains a coating material other than a coupling agent,
wherein a coverage of the base particle with the coating layer is from 60% to 100% inclusive when measured as according to the description in paragraph [0018].

2. The cellulose particles according to claim 1, wherein the coverage of the base particle with the coating layer is from 80% to 100% inclusive.

3. The cellulose particles according to claim 2, wherein the coverage of the base particle with the coating layer is from 90% to 100% inclusive.

4. The cellulose particles according to any one of claims 1 to 3, wherein a coating mass of the coating layer with respect to the base particle is from 1% by mass to 40% by mass inclusive.

5. The cellulose particles according to claim 4, wherein the coating mass of the coating layer with respect to the base particle is from 3% by mass to 30% by mass inclusive.

6. The cellulose particles according to any one of claims 1 to 5, wherein the cellulose particles have a volume average particle diameter of from 1 µm to 100 µm inclusive.

7. The cellulose particles according to any one of claims 1 to 6, wherein the coating layer contains, as the coating material, at least one selected from the group consisting of a fatty acid, a fatty acid metal salt, and an amino acid compound.

8. The cellulose particles according to claim 7, wherein the fatty acid is at least one selected from the group consisting of a linear fatty acid and a hydroxy fatty acid, and
wherein the fatty acid metal salt is a linear fatty acid metal salt.

9. The cellulose particles according to any one of claims 1 to 8 each further comprising an intermediate layer between the base particle and the coating layer.

10. The cellulose particles according to claim 9, wherein the intermediate layer contains at least one intermediate material selected from the group consisting of a polyamine compound, a polyquaternium, a polysaccharide compound, and a polyacrylic acid.

11. A method for producing cellulose particles, the method comprising:
obtaining base particles containing cellulose as a main component;
coating the base particles with a coating material other than a coupling agent,
wherein a coating mass of the coating layer with respect to the base particle is from 1% by mass to 40% by mass inclusive, and
wherein a coverage of the base particle with the coating layer is from 60% to 100% inclusive when measured as according to the description in paragraph [0018].

## Patentansprüche

1. Zellulosepartikel, die jeweils umfassen:
ein Basispartikel, das Zellulose als eine Hauptkomponente enthält; und
eine Beschichtungsschicht, die das Basispartikel abdeckt und ein anderes Beschichtungsmaterial als ein Kupplungsmittel enthält,
wobei ein Abdeckungsgrad des Basispartikels mit der Beschichtungsschicht, wenn er gemäß der Beschreibung in Absatz [0018] gemessen wird, von 60 % bis 100 % einschließlich beträgt.

2. Zellulosepartikel nach Anspruch 1, wobei der Abdeckungsgrad des Basispartikels mit der Beschichtungsschicht von 80 % bis 100 % einschließlich beträgt.

3. Zellulosepartikel nach Anspruch 2, wobei der Abdeckungsgrad des Basispartikels mit der Beschichtungsschicht von 90 % bis 100 % einschließlich beträgt.

4. Zellulosepartikel nach einem der Ansprüche 1 bis 3, wobei eine Beschichtungsmasse der Beschichtungsschicht in Bezug auf das Basispartikel von 1 Massen-% bis 40 Massen-% einschließlich beträgt.

5. Zellulosepartikel nach Anspruch 4, wobei die Beschichtungsmasse der Beschichtungsschicht in Bezug auf das Basispartikel von 3 Massen-% bis 30 Massen-% einschließlich beträgt.

6. Zellulosepartikel nach einem der Ansprüche 1 bis 5, wobei die Zellulosepartikel einen volumendurchschnittlichen Teilchendurchmesser von 1 µm bis 100 µm einschließlich aufweisen.

7. Zellulosepartikel nach einem der Ansprüche 1 bis 6, wobei die Beschichtungsschicht als das Beschichtungsmaterial mindestens eines, das aus der Gruppe, die aus einer Fettsäure, einem Fettsäure-Metallsalz und einer Aminosäureverbindung besteht, ausgewählt wird, enthält.

8. Zellulosepartikel nach Anspruch 7, wobei die Fettsäure mindestens eine ist, die aus der Gruppe, die aus einer linearen Fettsäure und einer Hydroxyfettsäure besteht, ausgewählt wird, und
wobei das Fettsäure-Metallsalz ein lineares Fettsäure-Metallsalz ist.

9. Zellulosepartikel nach einem der Ansprüche 1 bis 8, die ferner jeweils eine Zwischenschicht zwischen dem Basispartikel und der Beschichtungsschicht umfassen.

10. Zellulosepartikel nach Anspruch 9, wobei die Zwischenschicht mindestens ein Zwischenmaterial, das aus der Gruppe, die aus einer Polyaminverbindung, einem Polyquaternium, einer Polysaccharidverbindung und einer Polyacrylsäure besteht, ausgewählt wird, enthält.

11. Verfahren zum Produzieren von Zellulosepartikeln, wobei das Verfahren umfasst:
Erhalten von Basispartikeln, die Zellulose als eine Hauptkomponente enthalten;
Beschichten der Basispartikel mit einem anderen Beschichtungsmaterial als einem Kupplungsmittel,
wobei eine Beschichtungsmasse der Beschichtungsschicht in Bezug auf das Basispartikel von 1 Massen-% bis 40 Massen-% einschließlich beträgt, und
wobei ein Abdeckungsgrad des Basispartikels mit der Beschichtungsschicht, wenn er gemäß der Beschreibung in Absatz [0018] gemessen wird, von 60 % bis 100 % einschließlich beträgt.

## Revendications

1. Particules de cellulose comprenant chacune :
une particule de base contenant de la cellulose comme un composant principal ; et
une couche de revêtement qui recouvre la particule de base et contient un matériau de revêtement autre qu'un agent de couplage,
dans lesquelles une couverture de la particule de base avec la couche de revêtement est de 60 % à 100 % inclusivement lorsqu'elle est mesurée conformément à la description dans le paragraphe [0018].

2. Particules de cellulose selon la revendication 1, dans lesquelles la couverture de la particule de base avec la couche de revêtement est de 80 % à 100 % inclusivement.

3. Particules de cellulose selon la revendication 2, dans lesquelles la couverture de la particule de base avec la couche de revêtement est de 90 % à 100 % inclusivement.

4. Particules de cellulose selon l'une quelconque des revendications 1 à 3, dans lesquelles une masse de revêtement de la couche de revêtement par rapport à la particule de base est de 1 % en masse à 40 % en masse inclusivement.

5. Particules de cellulose selon la revendication 4, dans lesquelles la masse de revêtement de la couche de revêtement par rapport à la particule de base est de 3 % en masse à 30 % en masse inclusivement.

6. Particules de cellulose selon l'une quelconque des revendications 1 à 5, dans lesquelles les particules de cellulose ont un diamètre moyen de particules en volume de 1 µm à 100 µm inclusivement.

7. Particules de cellulose selon l'une quelconque des revendications 1 à 6, dans lesquelles la couche de revêtement contient, en tant que matériau de revêtement, au moins l'un sélectionné parmi le groupe constitué d'un acide gras, d'un sel de métal d'acide gras et d'un composé d'acide aminé.

8. Particules de cellulose selon la revendication 7, dans lesquelles l'acide gras est au moins l'un sélectionné parmi le groupe constitué d'un acide gras linéaire et d'un acide gras hydroxylé, et
dans lesquelles le sel de métal d'acide gras est un sel de métal d'acide gras linéaire.

9. Particules de cellulose selon l'une quelconque des revendications 1 à 8, comprenant en outre chacune une couche intermédiaire entre la particule de base et la couche de revêtement.

10. Particules de cellulose selon la revendication 9, dans lesquelles la couche intermédiaire contient au moins un matériau intermédiaire sélectionné parmi le groupe constitué d'un composé polyamine, d'un polyquaternium, d'un composé polysaccharidique et d'un acide polyacrylique.

11. Procédé pour produire des particules de cellulose, le procédé comprenant :
obtenir des particules de base contenant de la cellulose comme un composant principal ;
enrober les particules de base avec un matériau de revêtement autre qu'un agent de couplage,
dans lequel une masse de revêtement de la couche de revêtement par rapport à la particule de base est de 1 % en masse à 40 % en masse inclusivement, et
dans lequel une couverture de la particule de base avec la couche de revêtement est de 60 % à 100 % inclusivement lorsqu'elle est mesurée conformément à la description dans le paragraphe [0018].
